# EUROPEAN PATENT APPLICATION

(11) **EP 2 622 968 A1**
(43) Date of publication of application: **07.08.2013**
(21) Application number: 13151877.1
(22) Date of filing: 18.01.2013
(51) Int. Cl.: A23K 1/16, A23K 1/18, A01K 97/04

(54) **Fish feeding stimulant and product**

(30) Priority: 02.02.2012 US 201213364731
(71) Applicant: Mills, Patrick, Plainfield, IL 60544 (US)
(72) Inventor: Mills, Patrick, Plainfield, IL 60544 (US)
(74) Representative: Moore, Barry

(57) **Abstract**

An agent and method for inducing food search behavior in fish and other aquatic life forms is disclosed. The agent comprises one or a combination of amino acids. The agent may be applied to or incorporated with a wide variety of baits, lures or other carriers. When immersed in water, the loading of the agent combined with the porosity of the carrier will cause an optimal flux rate of dispersion in the water that will stimulate involuntary food search behavior in fish and other aquatic life forms.

## Description

### TECHNICAL FIELD

The invention relates generally to chemosensory stimulation in fish and more particularly to fish feeding stimulants and products that use this principle.

### BACKGROUND

Most species of fish have extremely sensitive olfactory and gustatory systems which allow for survival in an environment containing a variety of dissolved chemical stimuli. The chemical stimuli can originate from foodstuffs, potential predators, pollutants, and many other sources throughout the water. While fish have evolved to smell and taste food items in a way familiar to us, they also possess an additional, more primal, olfactory sense - the chemosensory apparatus. This chemosensory apparatus originally evolved to distinguish between food and other things in a fish's environment. In particular, the chemosensory system of fish is optimized to detect amino acids (AAs) originating from either animal or vegetable protein sources.

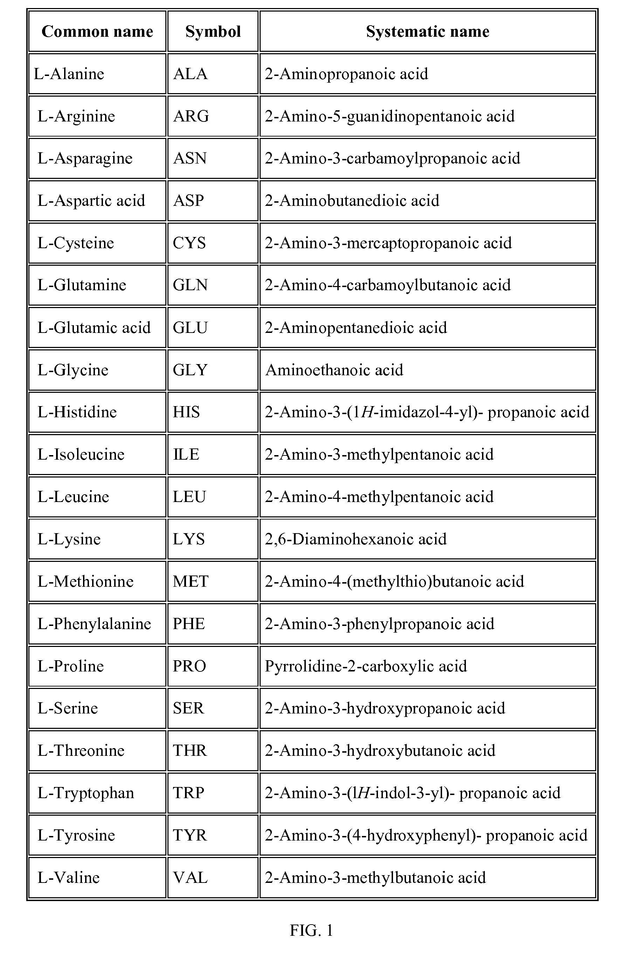

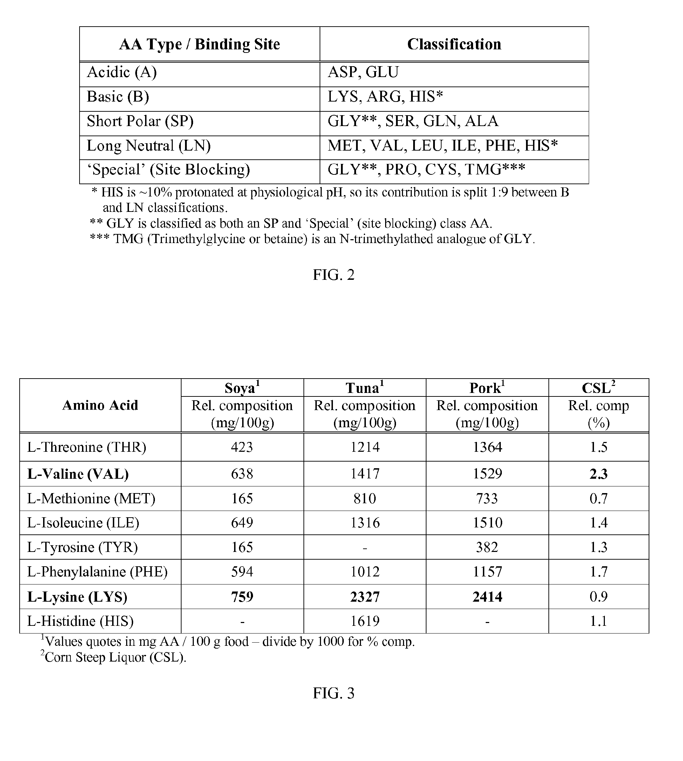

Amino Acids are found in all proteins, both animal and vegetable, with said proteins being constructed from a common set of twenty naturally occurring AA "building blocks" as shown in FIG. 1. A majority of these naturally occurring AAs may be further classified based upon the chemical makeup and/or relative sizes of their respective side chains, as show in FIG. 2. L-Histidine is approximately 10% protonated at physiological pH, so its contribution is split 1:9 between the respective basic and long neutral classifications.

In order to better understand the chemosensory recognition of AAs and, ultimately, AA induced involuntary feeding stimulus, it is important to become familiar with the AA profiles of proteins common to everyday feedstuffs. As illustrated by the table in FIG. 3, the proteins present within any particular foodstuff give rise to a unique AA profile for that food, with these AAs continually 'leaking' (in small amounts) into the environment around said foodstuff, be it plant or animal, alive or dead. Thus, wherever organic matter (i.e. food) exists, it is continually exuding its unique AA profile into its immediate surroundings.

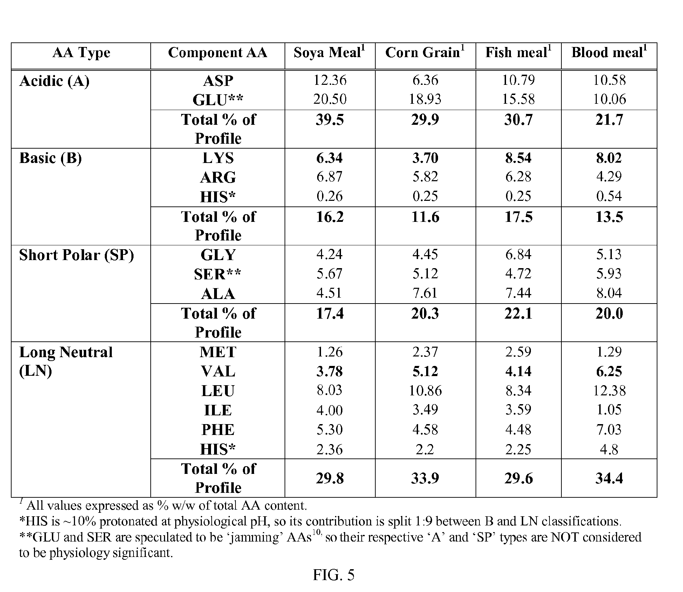

The makeup of such profiles, as shown in more detail in FIG. 5, invariably comprise varying amounts of the 20 naturally occurring AAs (typically ∼2 - 6% each) with a single AA, belonging to the most abundant class of AAs, in slight excess over all others. An examination of such data shows L-Lysine (LYS), from the 'Basic' (B) group of AAs, is often the most abundant AA among profiles derived from meat proteins; while L-Valine (VAL), from the 'Long Neutral' (LN) AA group, typically tops the profiles of vegetable proteins.

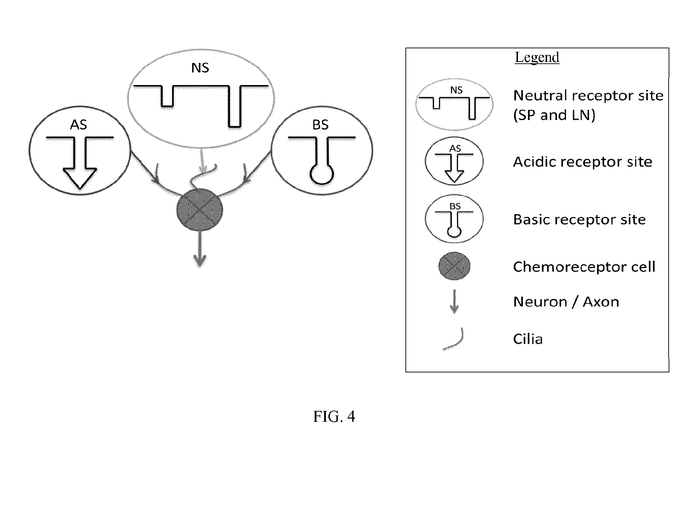

It has been established that the chemoreceptor cells of fish possess multiple cilia, which, in turn, house 3 distinct types of AA receptor sites - acidic sites (AS), basic sites (BS) and neutral sites (NS), with each dedicated to the respective recognition of AAs possessing acidic, basic or side neutral chains. The neutral receptor hosts a pair of dissimilar sites dedicated to the recognition of AAs possessing 'Short Polar' (SP) and 'Long Neutral' (LN) side chains, respectively. This concept is shown in FIG. 4, which depicts a schematic diagram illustrating acidic (AS), neutral (NS), and basic (BS) AA binding sites located at the cilia of the chemoreceptor cell. While model cilia are shown to possess a single type of AA receptor, it is understood that *actual* cilia *likely* concurrently host AS, NS and BS sites (typically as dedicated 'clusters').

Furthermore, in common with the established model of olfactory stimulus, it is assumed that each chemoreceptor cell is 'triggered' via an action potential that, in turn, arises from a depolarization of the cilia's plasma membrane through adsorption events associated with the activation of specific AA receptors at its surface. It is such stimuli that, ultimately, alert the fish to the presence of AAs emanating from either an animal or vegetable proteins.

### SUMMARY

In one embodiment, there is provided a fish feeding stimulant that uses amino acids to stimulate feeding behavior in fish and other aquatic life forms.

In another embodiment, there is provided a method for manufacturing a feeding product. The method comprises grinding a fish feeding stimulant into a fine powder, bringing a quantity of water to a boil, then cooling to approximately 80 °C, then slowly adding the of fish feeding stimulant to the pre-boiled water while stirring and stirring the solution until the solids are completely dissolved. The next step is then spraying the solution directly onto feed pellets while tumbling the mix well; and finally air drying treated pellets for 45-60 minutes.

### BRIEF DESCRIPTION OF THE DRAWINGS

Features of example implementations of the invention will become apparent from the description, the claims, and the accompanying drawings in which:

FIG. 1 is a table of the naturally occurring amino acids.

FIG. 2 is a table showing types of amino acids and their associated binding sites.

FIG. 3 is a table showing levels of amino acids found within some common foodstuffs.

FIG. 4 is a representation of the AA binding sites located at the cilia of the chemoreceptor cell.

FIG. 5 is a table showing the composition of amino acid profiles as a function of amino acid type for some common foodstuffs.

FIG. 6 is a representation of an OR/EOR Boolean logic model for the transduction of AA stimulus.

FIGS. 7A-7E are representations of an OR/EOR Boolean logic model for different environments of AAs.

FIG. 8 is a graph showing stimulatory response as a function of composition for mixtures of L-Valine (V) and L-Lysine (K).

FIG. 9 is a table showing the ratio of physiologically important AA types for various food types.

FIGS. 10A-D are representations of a modified OR/EOR Boolean model of AA recognition in Predators / Omnivores exhibiting dissimilar levels of stimulatory response.

FIGS. 11A-C are a representations of generic OR/EOR Boolean Models of AA recognition in Predators/Omnivores, Scavengers, and Opportunist Omnivores.

FIGS. 12A-12C shows the effect of three GLY/LYS ratios on the level of feeding stimulation in fish.

FIG. 13 is a table showing the % w/w feed loadings and corresponding flux rates for L-lysine only, highly porous embodiments.

FIG. 14 is a table showing the % w/w feed loadings and corresponding flux rates for L-lysine only, poorly porous embodiments.

FIG. 15 is a table showing the VAL: LYS ratios required to achieve the Meta-NS, Full Metamodulation and Meta-BR embodiments.

FIG. 16A is a representation of an OR/EOR model showing the distribution of NS / BS receptor site occupancies, as observed under the 'medium' concentration regime, for the Meta-BR Mixture formulation.

FIG. 16B is a representation of an OR/EOR model showing the distribution of NS / BS receptor site occupancies, as observed under the 'medium' concentration regime, for the Meta-NR Mixture formulation.

### DETAILED DESCRIPTION

The chemosensory apparatus of fish and other aquatic life forms appear to have originally evolved, and continue to exist, as simple 'Yes' or 'No' indicators for the presence of either 'meat' or 'vegetable' food items, based upon the detection of specific AAs arising from these respective foods AA profiles. Briefly, as illustrated in FIGS. 3 and 5, the AA profiles of 'Meat' proteins contain a majority fraction of charged (A/B) AAs; while 'Vegetable' sources typically contain a higher proportion of neutral (SP/LN) AAs. L-Lysine (LYS), from the charged class of AAs, is often the most abundant AA among profiles derived from meat proteins; while L-Valine (VAL), from the neutral AA class, typically tops the profiles of vegetable proteins. Furthermore, the chemoreceptors of fish are largely devoted to the preferential recognition of five physiologically significant AAs - LYS, from the B group, as well as VAL, PHE, ILE and HIS from the LN group.

Primitive aquatic life forms initially evolved chemoreceptors to detect foodstuffs based upon subtle differences between their respective, largely generic, 'meat' or 'vegetable' AA profiles - i.e. not necessarily a distinct molecular species, but a slight excess of either 'meat' (A/B) or 'vegetable' (SP/LN) class AAs within these foods respective AA profiles. Specifically, it is shown that LN: B AA ratios of greater than approximately 2.25:1 typically indicate the presence of AAs emanating from common 'vegetable' sources, while 'meat' proteins give rise to respective LN: B AA ratios less than this value. The advantage of such a simple "yes" or "no" indicator is that the organisms need only employ no more than a maximum of four olfactory receptor proteins, not the approximately 1000 or so odorant specific chemoreceptors utilized by modern day creatures. Thus, the essential advantage of such a strategy is evolutionary simplicity, while its primary disadvantage is a lack of chemical specificity - the detection of AAs merely indicates the presence of certain food types, not the explicit identity or condition of said foodstuff.

If the relative concentration of specific, physiologically significant, AA(s) within AA mixtures are increased by defined amounts; or either single or specific binary mixtures of AAs are utilized in isolation, the fishes' response will transition from that of a 'normal' mild stimulatory effect (associated with a slight excess of a specific class of AAs within a food's AA profile, as discussed above) to a state of strong, involuntary stimulation. However, as discussed further below, it is also important to acknowledge that practical limit exists with regard to overloading bait or feed embodiments, with either single AAs, or simple combinations of AAs, as loadings greater than approximately 10 % w/w have been shown to return significantly diminished catch rates due to overstimulation. Consequently, there are several 'Goldilocks zones' of dosing, for both single and multiple AA embodiments, which lie in the approximate range of 0.2 - 10.0 % w/w. Only baits or fish feeds dosed at these levels are capable of eliciting the desired involuntary feeding effect.

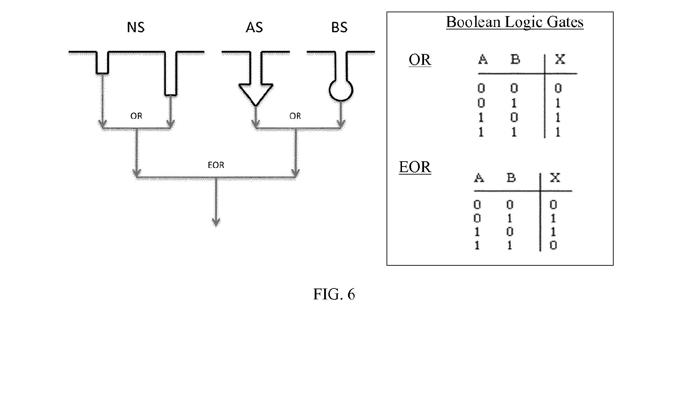

A fish's chemosensory apparatus for transduction of AA stimuli can be modeled by Boolean logic, as shown in FIG. 6. In this figure, NS represents a neutral site that can receive either short polar and/or long neutral side chain AA(s), AS represents a site that can receive an AA from the acidic class while BS represents a site that that can receive an AA from the basic class. Because AA transduction processes essentially comprise combinations from simple 'on /off electrochemical pulses, or 'switches', the OR/EOR diagram of FIG. 6 provides a useful model of their relationships. The activation of either or both of the NS receptors' SP and/or LN sites, primarily associated with the detection of 'vegetable' AAs, will result in a positive transduction event. In Boolean terms this constitutes an OR gate. Similarly, activation of either or both of the AS and/or BS receptors, associated with the recognition of 'meat' AAs, will also result in a positive transduction event - this, similarly, constitutes a dedicated OR gate. The respective outputs from these two types of independent OR gates, when combined, give rise to outputs associated with an EOR gate for the receptor quartet as a whole. Thus, while 'on' signals arising from either the NS receptor or the AS / BS receptors will result in a net positive transduction event, simultaneous 'on' signals emanating from both of these respective receptors types will not result in a net transduction event (i.e. they undergo metamodulation, or 'cancel').

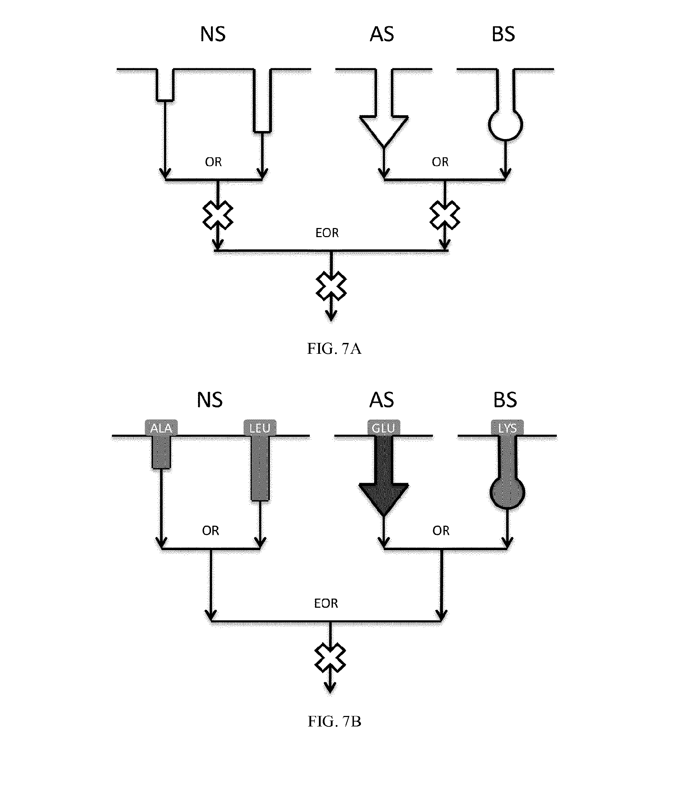

The operation of the OR/EOR model is further explained in connection with FIGS. 7A-7E. Since each model receptor quartet may bind between 1 and 4 separate AAs, each quartet will then possess a total of 16 distinct AA occupancy combinations. Of these many permutations, only six specific instances return positive net transductory responses, which we have, in turn, been able to directly correlate with the findings of experimental studies and field trials.

FIG. 7A depicts the resting state, or null condition when the fish's chemoreceptors are not binding any AAs. This state represents the non-detection of AAs, i.e. the absence of any protein based foodstuff within the fish's environment.

FIG. 7B depicts the saturated state, when each receptor site quartet is fully occupied. This state is associated with high ambient concentrations of AAs belonging to all four AA classes - such as the fish would encounter when engaged in the process of feeding. Under such circumstances, the fishes' chemoreceptors must shut down, so to prohibit overstimulation. As shown by FIG 7B, a "1" at the all four inputs of the OR gates results in a "1" at both inputs of the EOR gate, which results in a "0" output representing the 'saturated' condition.

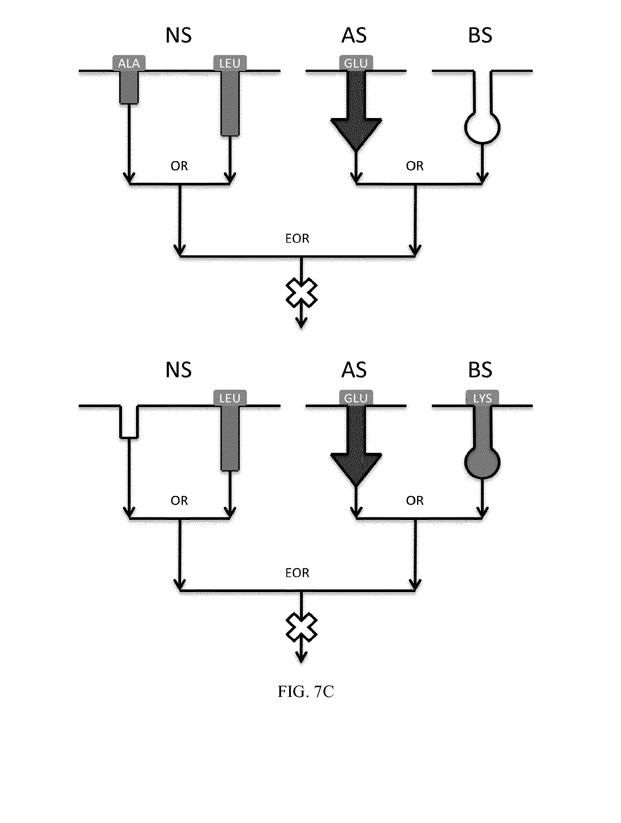

FIG. 7C depicts a transitional state where only three of the four sites for each receptor quartet are active. When any of the four classes of AAs is exhausted, the receptor is no longer saturated. However, in all instances, AAs binding to 3 of the 4 remaining classes of active binding sites will result in the cancellation of transduction signals from polar and non-polar receptor sites and an overall "0" output.

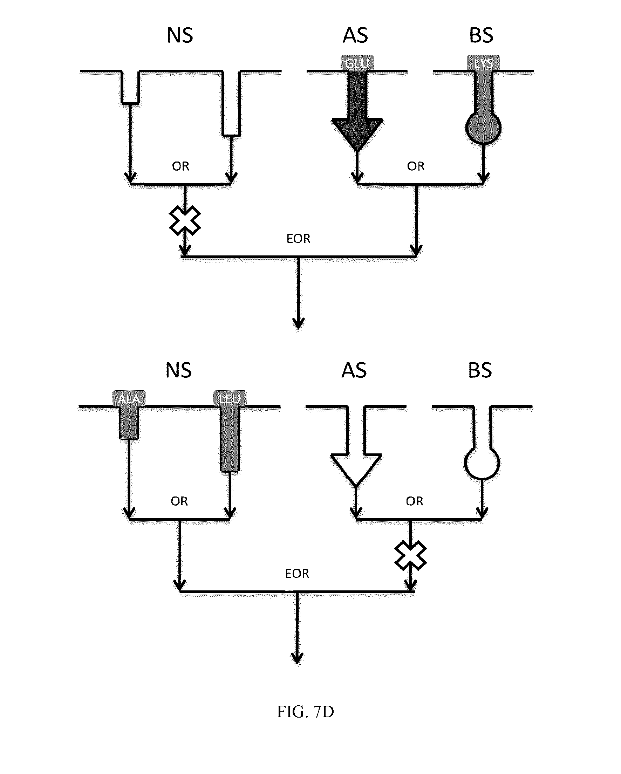

FIG. 7D depicts the natural stimulation state, where there is a slight excess of 'meat' or 'vegetable' AAs. Under the low concentration regime, defined as the condition where the *most* abundant *class* of AAs within a foodstuffs AA profile are *not* present at high enough concentrations to bind, respectively, with *all* their available receptor sites; a fraction of the fishes' quartets will come to possess a '2 from 4' occupancy, as illustrated by FIG. 7D. For AA profiles associated with 'meat' and 'vegetable' protein sources, positive transductory responses are returned. These findings accurately model the mild stimulatory effects associated with these proteins respective AA profiles, as encountered by fish in the wild, as a mixture of (non-stimulatory) 'saturated' and (stimulatory) '2 from 4' states would necessarily return a diminished net stimulatory response under such conditions. This figure represents a condition such that a fish's recognition of either 'meat' or 'vegetable' based foodstuffs, arising from natural sources, is directly coupled to the detection of a slight excess of AAs, within the food's profile, belonging to one of two general classes - 'meat' (A,B) or 'vegetable' (SP,LN), respectively.

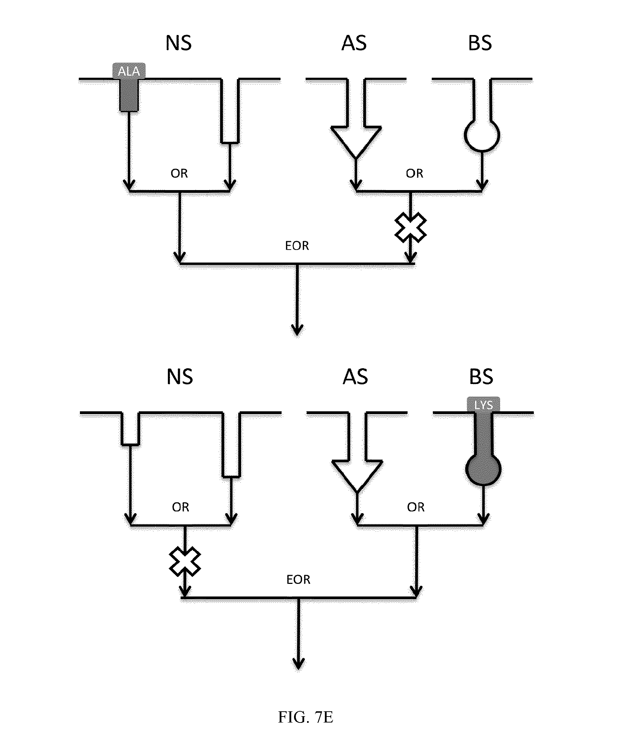

FIG. 7E depicts the artificial stimulation state where there is an excess of either single 'meat' or 'vegetable' AAs. This figure shows that essentially *any* individual AA can elicit an enhanced feeding behavior in fish, as effectively modeled by the OR/EOR model. Briefly, every receptor site quartet binding a *single* AA, from *any* of the four AA types will return a positive transductory response. As explained in US Patent Application No. 12/462,159, incorporated by reference, the artificial stimulation state is highly concentration dependent. Briefly, in the absence of 'cancelling' AAs, belonging to dissimilar AA classes (as are *always* found within in any natural food's AA profile), receptor quartets binding single AAs will, necessarily, return positive transductory responses. Thus, even at relatively low concentrations, overstimulation due to the binding of single AA types quickly becomes significant. However, as explained in the prior patent application, this effect can be minimized, with regard to optimally artificially stimulating fish to feed, by carefully controlling the flux of AAs entering the fishes' environment via manipulating both the porosity of a bait and the loading of an amino acid in the bait.

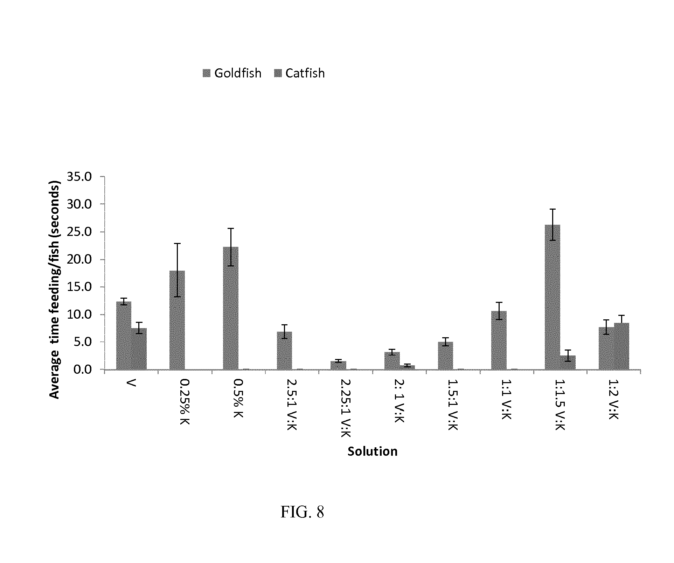

The relationship between stimulatory response (as determined through average feeding time / fish) and AA ratio for a variety of net equimolar mixtures comprised of VAL (V) and LYS (K), as well as reference solutions containing the respective individual AAs is shown in FIG. 8. This graph shows that a 0.5% LYS solution gives rise to a significantly enhanced stimulatory response; while a similar concentration of VAL merely generates a response of approximately 50% to that observed for a similar strength LYS solution. More significantly, as shown in FIG. 8, a VAL ('LN') to LYS ('B') AA ratio of about 2.25:1 causes an essentially complete attenuation of the net stimulatory response which is, conversely, reversed for a 1:1.5 VAL/LYS ratio.

The data in FIG. 8 leads to several conclusions. First, the fact that a VAL solution returns an approximately 50% diminished stimulatory response to that observed for LYS, as well as, crucially, that a VAL: LYS ratio of 2.25:1 gives rise to a completely metamodulated, or 'null', response demonstrates that, for these two similarly potent AAs, the numbers of their respective binding sites (assuming similar 'strong' binding affinities for these full agonists) are also likely present in an analogous ∼2.25:1 ratio. Thus, for carp, as well as, perhaps, most other 'predator / omnivore' species, such as bass, it is now concluded that these species possess physiologically significant Long Neutral ('LN') and Basic ('B') binding sites in a respective ∼2.25: 1 ratio. Importantly, members of both the 'A' and 'SP' AA groups are NOT considered to be physiologically significant. Since it has been shown that carp exhibit signs of physiological distress when exposed to either glutamine (GLU) or serine (SER), it is understood that carp, as well as other 'Predator / Omnivore' species, likely possess very small relative fractions of both 'A' and 'SP' type AA receptors; as only such an arrangement would be capable of inhibiting overstimulation through the recognition of such highly agonistic 'jamming' AAs. Thus, as a direct consequence, it is strongly inferred that only AAs belonging to the 'B' and 'LN' groups are physiologically significant with regard to the fishes' ability to detect forage via the recognition of solvated AAs.

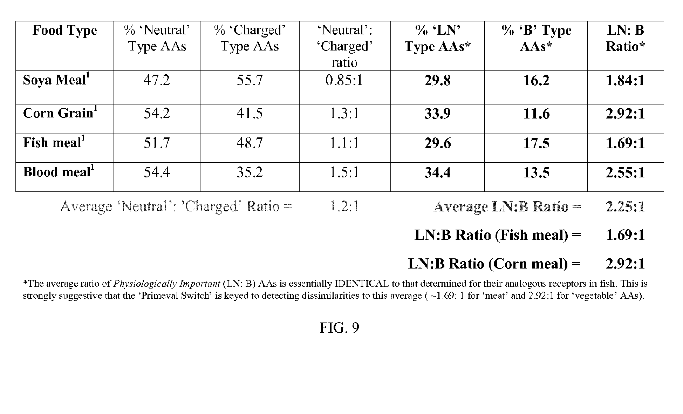

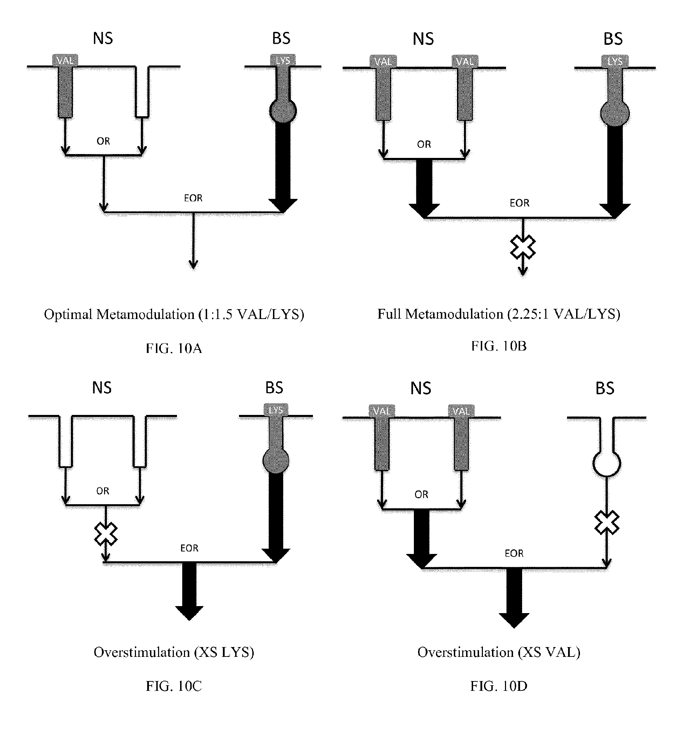

As shown in FIG. 9, the *average* AA profile of a variety common foodstuffs features 'LN' and 'B' type AAs in an essentially identical (2.25:1) ratio to the fully metamodulated experimental combination illustrated by FIG. 8. Specifically, since it is now confirmed that the fishes' chemoreceptors possess dedicated 'physiologically significant' (LN and B) AA receptors in analogous amounts to their corresponding AA types found within an 'average' AA profile; it is then inferred that slight excesses of either 'non-cancelling' 'vegetable' (LN) or 'meat' (B) AAs, as found within these respective food types will, in turn, give rise to an incompletely metamodulated transductory responses - thereby allowing for the detection of these specific food items. Most importantly, FIG. 8 shows that the 1:1.5 VAL/LYS ratio generates a greater stimulatory response than the (0.5% LYS) embodiment - this finding illustrates the condition of *optimal receptor potential modulation*; i.e. the ideal VAL/LYS ratio necessary to ideally attenuate an (otherwise) over stimulatory response via a VAL induced partial metamodulation of the LYS generated transductory signal. Modified versions of the OR/EOR circuit, shown in FIGS. 10A-D take into account the newly proposed ∼2:1 ratio of 'LN' to 'B' type binding sites, as well as a significantly diminished number of 'A' and 'SP' receptors, better model the chemosensory apparatus of species, such as carp and bass, that typically feed on 'live' meat and/or vegetable forage.

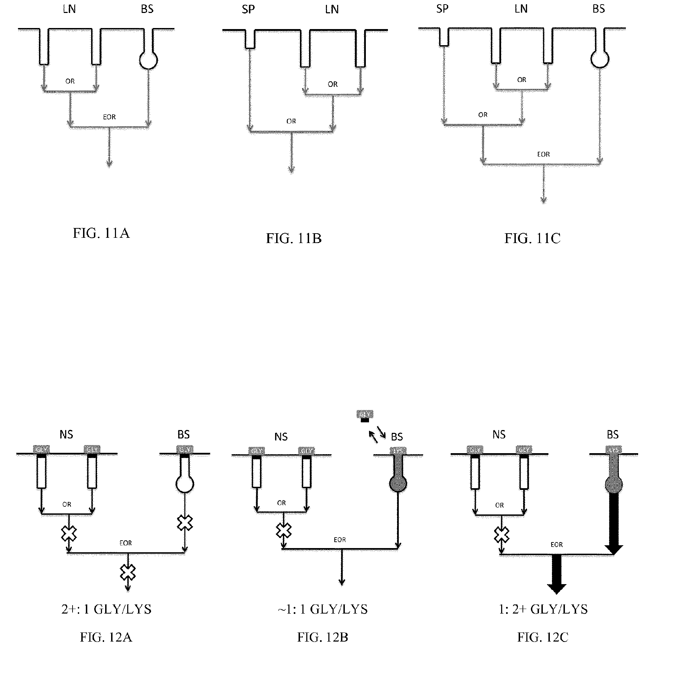

As shown in FIG. 8, Bullhead catfish (as illustrated by the right hand side bar for V and several combinations) seem to exhibit a dissimilar response to solvated AAs than most other species. This observation is likely a consequence of the fact that this species is a dedicated scavenger. Briefly, decomposed organic matter, as well as blood meal (see FIG. 9) gives rise to AA profiles rich in neutral ('SP' and/or 'LN') AAs, meaning there would be no evolutionary advantage tied to scavenger species employing 'charged' AA receptors (A and/or B types) dedicated to the recognition of 'live' foods. Thus, scavenger species, such as Bullheads, utilize a significant majority of NS class receptors. Similarly, important game and commercial species, such as bass and channel catfish, also posses dedicated AA receptor configurations best suited to their specific forage. Thus, as illustrated by FIGS. 11A-C, different types of fish have different Boolean receptor models. FIG. 11A shows a model appropriate for 'Predator / Omnivore' ('live' foods), FIG. 11B shows a model for 'Scavenger' (dead foods) and FIG. 11C shows one for 'Opportunist Omnivore' (any food) species. It is important to note that each of the Boolean schemes presented in FIGS. 11A-C are variants of the original OR/EOR model shown in FIG. 6.
Optimized Receptor Potential (ORP) Model of Stimulatory Response

Optimized Receptor Potentials (ORPs) locally generated across cilia membranes through the adsorption of solvated AAs; coupled with a statistical description of such events, furnish a complete, micro-scale understanding of chemosensory stimulation. The binding of charged ('meat') 'A' / 'B' class adsorbates to their respective receptor proteins cause dedicated ion channels to open that, in turn, allow either Na⁺ *or* K⁺ ions to cross the host cilia's plasma membrane. Similarly, the binding of neutral ('vegetable') 'SP' / 'LN' class adsorbates at their respective receptors also causes dedicated ion channels to open but, importantly, only permit the *dissimilar* ion that transmitted by the 'charged' receptors to traverse the plasma membrane. For the purposes of this report, it is (arbitrarily) assumed that the 'charged' receptors are dedicated to the transmission of Na⁺ ions, with 'neutral' receptors only allowing the passage of K⁺ ions.

Importantly, even though ligand-gated ion channel(s) are opened by adsorbed AA(s), resulting in the establishment of a localized receptor potential, this *does not necessarily* mean that the host cilia's plasma membrane will, as a whole or in part, attain the required overall action potential needed to invoke a transductory response. The reason for this is that such highly localized receptor potentials must themselves reach a specific threshold in order to 'spread' or initiate the necessary systematic action potential - a process that is, in turn moderated through the generation of *graded potentials.* In other words, the magnitude of the localized receptor potentials generated are dependent on *'how many ion channels are activated and what type they are',* with only a fraction of these receptor potentials exceeding the threshold necessary to initiate a systemic action potential. Cells typically possess a resting potential of approximately +73 mV. When a sufficient number of sodium channels are opened (through the associated activation of charged / 'meat' AA receptors), this value rises to +100 mV. Significantly, however, the resting potential drops to -90 mV when potassium channels are opened (through the associated activation of neutral'/ 'vegetable' AA receptors). Now, if it is assumed that both of these respective voltages can exceed the threshold necessary to trigger an action potential, we then arrive at a sound physical basis for our Boolean model's two primary OR branches.

Perhaps most importantly, the magnitudes of the various graduated receptor potentials generated are equal to the sum of their respective component contributions that, in turn, ultimately arise from the simultaneous binding of AAs at both the 'charged' and 'neutral' class receptors. Since these two processes generate receptor potentials of differing polarity (positive vs. negative), when combined they return a metamodulated, or reduced, net potential. Such diminished cumulative potentials cannot attain the threshold necessary to initiate an action potential so, critically, inhibit stimulatory transduction. This essential finding not only describes the observed metamodulatory behavior of AA mixtures, but also furnishes a physical basis for the EOR junction found within our OR/EOR circuit model.

While the stimulatory properties of our single AA and optimally metamodulated binary AA mixture formulations have been explained in terms of their respective individual (median) receptor quartet OR/EOR Boolean models, several important details pertinent to the development of our (LYS+GLY) embodiment are better described using a *dependent* statistical model of stimulatory response. Briefly, under the high concentration condition, where essentially all the fishes' receptors are engaged, LYS and GLY simply compete for available 'B' sites, with the relative proportion of these sites occupied, by each respective AA type, being *dependent* on the fraction of each AA found within the solvated mixture. GLY is classified as a 'special' or 'site blocking' AA, principally because its side chain merely comprises an H atom (the smallest possible option). Thus, GLY cannot elicit a stimulatory response when bound. To use an analogy, its miniscule -H 'stub' may be thought of as a key shaft that has been largely 'snapped off' - it can still be pushed into a lock (bind to any receptor), but cannot be turned to engage said lock (elicit a positive transduction event). Thus, GLY, as well as other 'special' class AAs and/or AA analogues (PRO,CYS and/or TMG (trimethylglycine) may be considered to be partial agonist or 'site blocking' AAs that are, in turn able to bind to, but not activate, each of the receptor quartets' four types of site. Thus, LYS/GLY mixtures rich in GLY (FIG. 12A) will tend to bind a higher fraction of GLY to 'B' receptors, so returning a diminished stimulatory response; while combinations possessing an excess of LYS (FIG. 12C) will tend to occupy a higher fraction of BS receptors, leading to over-stimulation; with only formulations containing comparable amounts of GYL and LYS (FIG. 12B) being able to generate an optimally modulated response, thereby eliciting the desired optimal stimulatory effect. Interestingly, under the medium concentration condition ∼1:1 GLY/LYS mixtures also return an optimally modulated response; in this case likely due to the synergic relationship between the greater fraction of available binding sites and the corresponding higher probability that GLY will bind to 'LN' receptors (since LYS may only bind to 'B' receptors). This shows that GLY/LYS mixtures within a ∼equimolar 'Goldilocks zone' generate an optimized stimulatory response over medium - high concentration ranges.

Thus, in summary, it is possible to optimize the magnitude of specific receptor potentials (ORP theory) through utilizing mixtures comprising full agonist (e.g. LYS) and partial agonist (e.g. GLY) AAs. Such an approach ultimately allows for the magnitude of the net stimulatory response to be controlled over a broad concentration range, including the high concentration regime. In terms of developing viable commercial fish feeding stimulants for the retail fishing bait market, these embodiments represent a significant leap forward; since they allow the end user a considerable degree of latitude with regard to applying the product while, simultaneously, remaining confident that its overall effectiveness will not be affected. These findings are immensely important, as limiting overstimulation at higher concentrations should be considered the ultimate goal of any commercial fish feeding stimulant.

There are a variety of formulations featuring other physiologically significant AAs, for example, LYS, VAL, PHE, ILE and HIS, used either singularly or in specific combinations with GLY, that give useful embodiments.

### Low Concentration Embodiments

A low concentration condition is defined as the concentration of feeding stimulant in an aqueous medium where the most abundant class of AAs within a foodstuffs AA profile are not present at high enough concentrations to bind, respectively, with all their available receptor sites.

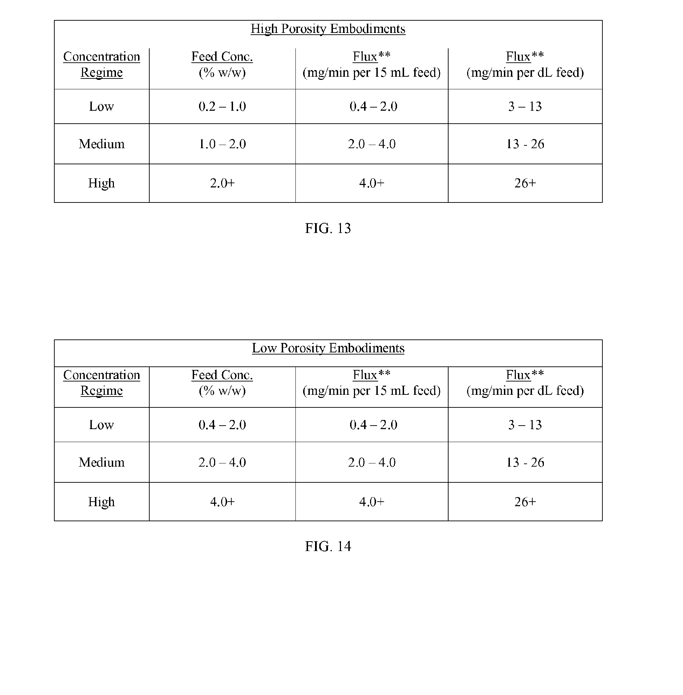

As disclosed in parent application US Ser. No. 12/462,159, incorporated by reference, a first embodiment is comprised of 5.0 kg LYS HC1, 0.5 kg MSG and 0.5 kg NaCl. LYS (83.3% w/w) is the mixture's only stimulatory component, with MSG and NaCl providing an enhanced palatability. As shown in FIGS. 13 and 14, both 'Highly'(FIG. 13) and 'Poorly' (FIG. 14) porous carriers may be dosed with specific amounts of LYS which, in turn, *ONLY* lead to the generation of the necessary 'magic flux' of LYS (3 - 13 mg/min per dL) under the low concentration condition. Highly porous embodiments include, but are not limited to, expander pellets, paste (dough), biodegradable imitation baits (e.g. Berkley Gulp!), surface treated feed pellets, groundbait (chum) and split or sliced beans and seed (e.g. canned sweet corn). Poorly porous embodiments include boilies (boiled pastes), permeable plastic lures, encapsulated feed pellets, soaked whole beans and seeds (e.g. maize). It is more appropriate to focus on flux, rather than concentration, for such applications since the 'internal concentration', or loading (% w/w), of an embodiment does not translate to an equivalent, constant external concentration around the bait (concentration will drop off, assuming radiative diffusion, with an inverse square relationship). Conversely, the flux 'away' (downstream) of the embodiment remains at a ∼constant level over larger distances away from the embodiment due to the 'bulk' movement of water (prevailing currents) associated with all natural bodies of water. It is assumed poorly porous embodiments are a minimum of 50% less permeable to feeding stimulants than highly porous embodiments. Thus, porosity and % w/w loadings exhibit a reciprocal relationship (i.e. % w/w loadings must be doubled if porosity is halved in order to maintain the necessary constant / stimulatory flux rate).

For a second embodiment, it is possible to utilize any single, or a combination of, physiologically significant LN type AAs (VAL, PHE, ILE and HIS) to construct analogous 'mirror image' LN embodiment(s) to the first embodiment. Such formulations would require approximately doubled (x2.25) molar quantities of LN type AAs. Specifically, high porosity embodiments (under the low concentration regime) would require loadings of ∼0.45 - 2.25 % w/w, with poorly porous embodiments requiring loadings in the range of 0.9 - 4.5 % w/w. Significantly, such formulations would likely also be highly attractive to scavengers (such as Bullhead catfish and/or burbot), so extending the cross-section of stimulated species; while, on the 'negative' side, LN AAs are typically both more expensive and less soluble than LYS which, in turn, may limit their commercial viability.

### Medium Concentration Embodiments

A medium concentration condition is defined as the concentration of feeding stimulant in an aqueous medium where the most abundant class of AAs within a foodstuffs AA profile are present at high enough concentrations to bind, respectively, with all their available receptor sites, while at the same time, the least abundant class of AAs within a foodstuffs AA profile is not present at high enough concentrations to bind, respectively, with all their available receptor sites.

A third embodiment is comprised of a mixture of a basic amino acid, for example, LYS, and physiologically significant 'LN' type AA(s), (e.g. VAL), in a respective molar ratio of between 1.25:1 and 1.75:1 which forms a metamodulated - base receptor (Meta-BR) formulation. This ratio is in agreement with the experimental findings shown in FIG. 8 and modeled by FIG. 10A which, in turn, illustrate the median optimal metamodulated site occupancy associated with achieving optimal fish feeding stimulation under mid-range concentrations. In terms of developing a viable 'medium concentration' Meta-BR embodiment, since only a ∼1:1.5 (0.67:1) VAL/LYS molar ratio is shown to return an optimized stimulatory response, corresponding combined AA feed loadings (for high porosity carriers) of ∼1.7-3.5 % w/w, yielding net respective flux rates of ∼23-44 mg/min/dL, should be employed. Total combined AA loadings of ∼3.4-7.0 % w/w should be used for poor porosity carriers.

It is noted that the first three embodiments must be prepared with strict protocols which, in turn, result in optimal bait loadings, and resultant flux rates, for the active ingredients.

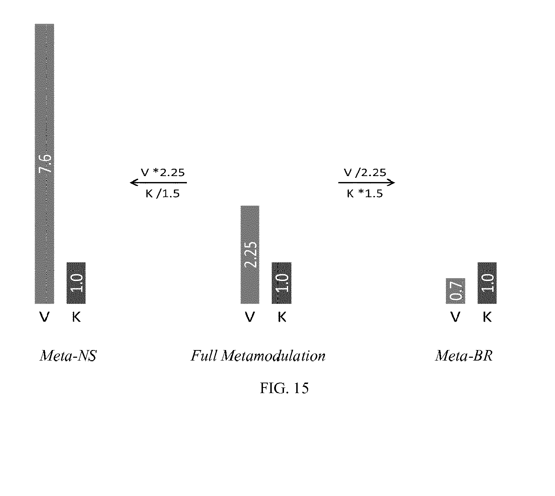

The metamodulated - neutral receptor site (Meta-NS) embodiment may be considered the 'mirror image' of the Meta-BR formulation. In this fourth embodiment, an ideally metamodulated state is achieved through the attenuation of an otherwise over-stimulatory transductory response, associated with an excess of bound 'LN' type AAs, via the coadsorption of a minor fraction of 'cancelling' 'B' type AA(s) (e.g. LYS). However, since the relative fraction of the respective native 'LN' and 'B' AA receptors at the chemoreceptor's cilia are, as illustrated by FIG. 8, present in an approximate ∼2.25:1 ratio; a significantly increased fraction of stimulatory 'LN' type AAs is required to achieve the desired optimal level of transductory response. Thus, based only a 'mirrored' proportionality relationship, with regard to the Meta-BR formulation, as detailed by FIG. 15, this embodiment uses a LN/B type AA molar ratio between 7.1:1 and 8.1:1 to achieve the desired optimal transductory response.

In terms of developing a viable medium concentration Meta-NS embodiment, since only a ∼7.6:1 VAL/LYS ratio, for example, is shown to return an optimized stimulatory response, corresponding optimal 'high porosity' carrier loadings of ∼2.5-5.1 % w/w (33-68 mg/min/dL flux rates) should be employed.

### Metamodulated mixture embodiments

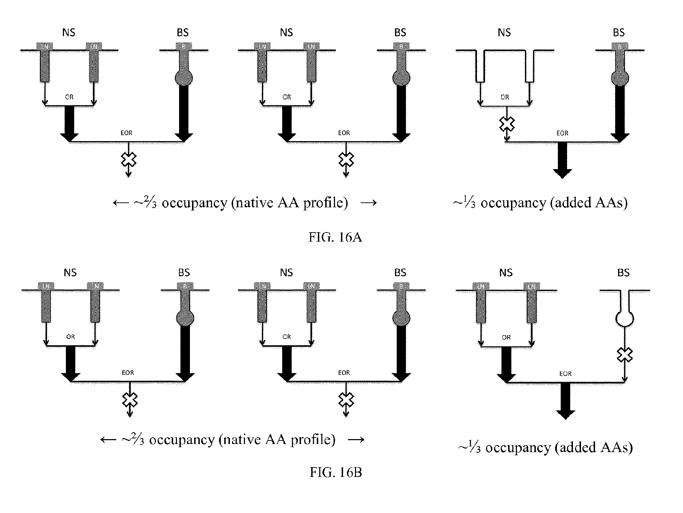

Fifth and sixth embodiments, illustrated by FIGS. 16A-16B, emulate the stimulatory effects of both the Meta-BR and Meta-NS embodiments. Briefly, through adding specific quantities of either 'B' (e.g. LYS) or 'LN' (e.g. VAL) AAs to the AA profiles of natural foodstuffs with a mixed amino acid profile, such as those shown in FIGS. 3 and 5, it is possible to generate formulations that, in turn, emulate their respective meta- embodiments. In addition to those shown in FIGS. 3 and 5, the amino acid mixture can be selected from natural digested or fermented protein sources, for example, hydrolyzed vegetable or animal proteins like HVP, CSL and HPP as well as synthetic free amino acid blends, for example, Braggs liquid aminos, Aquatrac and Minamino; as well as those derived from insect, fish, seeds and grains extracts. As shown in FIG. 9, an 'average' food's profile is comprised of LN and B type AAs in an approximate 2.25:1 ratio. Thus, by merely supplementing this mixture with an appropriate quantity of either physiologically significant B or LN type AA(s), an optimal metamodulatory ratio is achieved. FIGS. 16A-B illustrate the median site occupancies associated, respectively, with our Meta-BR Mixture and Meta-NS Mixture embodiments.

As can be seen through a comparison of FIGS. 16A and 16B, both mixtures are purported to share a common ∼2/3 fraction of saturated receptor quartets, whose adsorbates are attributed to AAs emanating from the food's native AA profile. Consequently, these formulations only differ terms of their individual 'mirror image' ∼⅓ fractions of occupied 'B' and 'LN' sites which are, in turn, deemed responsible for each respective embodiment's net stimulatory response. Thus, as is discussed immediately below, optimally metamodulated Meta-BR Mixture and Meta-NS Mixture formulations are generated through manipulating these minority states' respective occupancies.

The fifth embodiment, the Meta-BR Mixture is formed as follows. Since, as illustrated by FIG. 9, an 'average' AA profile possesses a LN: B ratio of ∼2.25:1, an optimally metamodulated ∼1:1.5 (0.67:1) LN: B ratio is achieved by simply adding a fixed proportion of 'B' type AA(s) to this 'host', or carrier, mixture. In this case, our goal is achieved through combining a 1.0 kg sample of 'host', or carrier, AAs with an additional ∼730 g of 'B' type AA(s) (e.g. LYS) - this corresponds to a 42% w/w mass loading for the resultant mixture. Importantly, the AA profiles of 'meat' and 'vegetable' proteins are, respectively, skewed in favor of 'B' and 'LN' type AAs. Specifically, as also shown by FIG. 9, fish and corn meals return corresponding LN: B ratios of 1.69: 1 and 2.92: 1, respectively. Thus, in order to achieve optimally metamodulated formulations, 565 g of LYS must be added to 1.0 kg of fishmeal; with 735 g of LYS being mixed with 1.0 kg of cornmeal. These values furnish corresponding mass loadings, for their resultant mixtures, of 36% w/w and 42% w/w, respectively. Other amino acid mixtures, as listed above, would similarly require specifically determined mass loadings of 'B' type AAs to order to achieve the necessary, optimally stimulatory, ∼1:1.5 (0.67:1) LN: B ratio.

In common with the analogous Meta-BR embodiment, our fifth embodiment, the Meta-BR Mixture formulation, should be added to 'highly porous' carrier at ∼1.7-3.5 % w/w (yielding 23-44 mg/min/dL flux rates), with loadings of ∼3.4-7.0 % w/w being adopted for use with 'poorly porous' carriers. Importantly, as with our third embodiment, the Meta-BR formulation, the inclusion of reduced fractions of 'B' type AA(s) within such embodiments will, consequently, lead to diminished, yet still physiologically significant, stimulatory effects. Thus, it is recommended that mass loadings of 'B' class AAs in the 20-60% w/w range, be used for the Meta-BR Mixture embodiment discussed immediately above. This stated % w/w range will, importantly, accommodate inherent variations among the relative amounts of 'meat' and 'vegetable' AAs found within the native AA profiles of a majority of natural foodstuffs.

The sixth embodiment, the Meta-NS Mixture formulation, requires a LN: B molar ratio of ∼7.6:1 to achieve an optimally metamodulated state. This goal is achieved by simply adding a specified proportion of 'LN' type AA(s) to the host AA mixture. In the case of mixtures possessing an 'average' AA profile, ∼1.67 kg of 'LN' type AA(s) (e.g. VAL) must added to 1.0 kg sample of 'host', or carrier, AAs - this corresponds to a 62% w/w mass loading for the resultant mixture. Importantly, as discussed in detail above, the AA profiles of 'meat' and 'vegetable' proteins are, respectively, skewed in favor of 'B' and 'LN' type AAs. Specifically, fish and corn meals return corresponding LN: B ratios of 1.69: 1 and 2.92: 1, respectively. Thus, in order to achieve optimally metamodulated formulations, 2.2 kg of VAL must be added to 1.0 kg of fishmeal; with 1.6 kg of VAL being mixed with 1.0 kg of cornmeal. These values furnish corresponding mass loadings, for their resultant mixtures, of 69% w/w and 62% w/w, respectively. Other amino acid mixtures, as listed above, would similarly require specifically determined mass loadings of 'B' type AAs to order to achieve the necessary, optimally stimulatory, ∼7.6:1 LN: B ratio.

As with the analogous binary AA Meta-NS embodiment, the Meta-NS Mixture formulation should added to 'highly porous' media at ∼2.5-5.1 % w/w (33-68 mg/min/dL flux rates), with loadings of ∼5.0-10.1 % w/w being adopted for use with 'poorly porous' formulations. Importantly, as with the original Meta-NR formulation, the inclusion of reduced fractions of 'LN' type AA(s) within such embodiments will, consequently, lead to diminished, yet still physiologically significant, stimulatory effects. Thus, it is recommended that mass loadings of 'LN' class AAs in the 40-75% w/w range, be used for the Meta-BR Mixture embodiment discussed immediately above. This stated % w/w range will, importantly, accommodate inherent variations among the relative amounts of 'meat' and 'vegetable' AAs found within the native AA profiles of a majority of natural foodstuffs.

### High Concentration Embodiments

A high concentration condition is defined as the concentration of feeding stimulant in an aqueous medium where all classes of AAs within a foodstuff's profile are present at high enough concentrations to bind, respectively, with all their available receptor sites.

A seventh embodiment comprises an approximate equimolar mixture of an amino acid or acids from the 'special' class with an amino acid or acids from the basic class. This embodiment circumvents overstimulation, associated with utilizing the first through sixth embodiments under the high concentration regime, by employing a dissimilar statistically dependent adsorption processes. Once an equimolar (1:1) mixture, for example, GLY/LYS, surpasses the low concentration condition, GLY and LYS begin to compete for 'B' receptors. Thus, the magnitude of any resultant transductory response does NOT now depend on the absolute concentration or flux of the AAs present (as with all previously discussed embodiments), but, instead, on the respective molar ratio of the competing AAs. Thus, seventh embodiments should be prepared by simply dosing high porosity carriers with GLY/LYS mixtures (possessing 0.5:1 - 2:1 GLY:LYS molar ratios) with loadings in excess of ∼2.0% w/w, so generating associated flux rates of greater than -26 mg/min/dL; while low porosity carriers should be prepared with loadings in excess of ∼4.0% w/w. The 'special' class of amino acids includes but is not limited to L-glycine, L-cysteine and L-proline, as well as trimethylglycine (TMG, a trimethylated analogue of GLY). The basic class includes but is not limited to L-lysine, L-arginine and L-histidine. Any of these amino acids may be used within the seventh embodiment.

In an eighth embodiment, a mirror image mixture may be prepared by combining GLY and LN type AAs in an approximate 1:1 molar ratio. Thus, as an example, such embodiments may be prepared by simply dosing high porosity carriers with, for example, GLY/VAL mixtures (possessing a 0.5:1 - 2:1 GLY:VAL molar ratio) with loadings in excess of ∼4.0% w/w, so generating associated flux rates of greater than ∼52 mg/min/dL; while low porosity carriers should be prepared with loadings in excess of ∼8.0% w/w. Other physiologically important LN type AAs (PHE, ILE, HIS) may be substituted, either singularly or in combination, for VAL within the eighth embodiment.

In the seventh and eighth embodiments, under the high concentration condition (as fish would typically encounter when in close proximity to either anglers' baits or commercial fish feeds) there is essentially no way for the fish to become over stimulated. Thus, embodiments featuring a ∼1:1 LYS / GLY molar ratio generate essentially identical stimulatory responses to our Low Concentration formulations with, most significantly, this effect being maintained for samples prepared with greater than x9 over standard Low Concentration embodiment % w/w loadings.

There are many types of carriers that can be used with the feeding stimulants of the various embodiments that have been discussed. These carriers include insect larvae, fish, seeds and grains. Manufactured food items can also be used as carriers, for example, commercial fish feed pellets, ground bait, paste, dough and boilies, as well as natural digested or fermented protein sources (e.g. hydrolyzed vegetable or animal proteins like HVP, CSL and HPP) and synthetic free amino acid blends (e.g. Braggs liquid aminos, Aquatrac and Minamino). Other carriers include artificial food items and lures, for example, imitation corn, plastic worms and fish, plugs and spinner baits. Carriers can also be formed from inorganic media such as compressed clays or salts and organic media such as PVA and solid sugar blocks.

The method of manufacturing a feeding product using any of the embodiments above is somewhat dependent on the type of carrier used. In one example, the following steps would be taken when using a high porosity carrier with the feeding stimulant of the seventh or eighth embodiments. A first step would be grinding 600g - 1350 g of the fish feeding stimulant into a fine powder.

The next step is bringing 1.0 - 2.25 L of water to a boil, then cooling to approximately 80 °C followed by a step of slowly adding the 600g - 1350 g of fish feeding stimulant to the pre-boiled water while stirring and stirring the solution until the solids are completely dissolved.

The next step is then spraying the solution directly onto 25 kg of feed pellets while tumbling the mix well; and finally air drying treated pellets for 45-60 minutes.

This results in a feeding product that will release the amino acids at a rate of greater than 26 mg/min/L within a body of water.

The steps or operations described herein are just for example. There may be many variations to these steps or operations without departing from the spirit of the invention. For instance, the steps may be performed in a differing order, or steps may be added, deleted, or modified.

Although example implementations of the invention have been depicted and described in detail herein, it will be apparent to those skilled in the relevant art that various modifications, additions, substitutions, and the like can be made without departing from the spirit of the invention and these are therefore considered to be within the scope of the invention as defined in the claims.

Furthermore, one or more of the following numbered clauses may describe and relate to further aspects or features within the context of the present teaching:
1. A feeding stimulant for fish and other aquatic life forms, comprising:
   a first effective amount of one or more amino acids from the basic (B) class of amino acids; and
   a second effective amount of one or more amino acids from the long neutral (LN) class of amino acids;
   wherein the molar ratio of the first effective amount to the second effective amount is in the range of 1.25:1 - 1.75:1.
2. The feeding stimulant of clause 1 wherein the basic (B) class of amino acids comprises L-lysine, L-arginine and L-histidine and the long neutral (LN) class of amino acids comprises L-valine, L-phenylalanine, L-isoleucine, L-histidine, L-leucine, and L-methionine.
3. The feeding stimulant of clause 2 further comprising:
   a carrier wherein the loading of the first and second effective amounts of amino acids in the carrier generate amino acid flux rates, emanating from the carrier, in the range of 22 - 44 mg/min/dL when the carrier is placed in an aqueous environment.
4. The feeding stimulant of clause 2 further comprising:
   a high porosity carrier wherein the loading of the first and second effective amounts of amino acids in the carrier is approximately 1.7 - 3.5 % w/w.
5. The feeding stimulant of clause 2 further comprising:
   a low porosity carrier wherein the loading of the first and second effective amounts of amino acids in the carrier is approximately 3.4 - 7.0+ % w/w.
6. The feeding stimulant of clause 3, wherein the composition of said carrier comprises natural food items, manufactured food items, artificial food items and lures, inorganic media, and organic media.
7. A feeding stimulant for fish and other aquatic life forms, comprising:
   a first effective amount of one or more amino acids from the basic (B) class of amino acids; and
   a second effective amount of one or more amino acids from the long neutral (LN) class of amino acids;
   wherein the molar ratio of the first effective amount to the second effective amount is in the range of 1: 6 - 1: 9.
8. The feeding stimulant of clause 8 wherein the basic (B) class of amino acids comprises L-lysine, L-arginine and L-histidine and the long neutral (LN) class of amino acids comprises L-valine, L-phenylalanine, L-isoleucine, L-histidine, L-leucine, and L-methionine.
9. The feeding stimulant of clause 8 further comprising:
   a carrier wherein the loading of the first and second effective amounts of amino acids in the carrier generate amino acid flux rates, emanating from the carrier, in the range of 33 - 68 mg/min/dL when the carrier is placed in an aqueous environment.
10. The feeding stimulant of clause 8 further comprising:
   a high porosity carrier wherein the loading of the first and second effective amounts of amino acids in the carrier is approximately 2.5 - 5.1 % w/w.
11. The feeding stimulant of clause 8 further comprising:
   a low porosity carrier wherein the loading of the first and second effective amounts of amino acids in the carrier is approximately 5.0 - 10.2+ % w/w.
12. A feeding stimulant for fish and other aquatic life forms, comprising:
   a first effective amount of one or more amino acids from the basic (B) or long neutral (LN) class of amino acids; and
   a second effective amount of an amino acid mixture containing basic (B) and long neutral (LN) amino acids;
   wherein the molar ratio of the combined effective amount of B type amino acids from the first effective amount and the second effective amount of the amino acid mixture, to the effective amount of LN class amino acids within the second amino acid mixture, is in the range of 1.25:1 - 1.75:1.
13. The feeding stimulant of clause 13 wherein the first effective amount is selected from the basic (B) class of amino acids and comprises at least one of L-lysine, L-arginine and L-histidine and the amino acid mixture comprises at least one of natural digested protein sources, fermented protein sources and synthetic free amino acid blends.
14. The feeding stimulant of clause 13 further comprising:
   a carrier wherein the loading of the first and second effective amounts of amino acids in the carrier generate amino acid flux rates, emanating from the carrier, in the range of 23 - 44 mg/min/dL when the carrier is placed in an aqueous environment.
15. The feeding stimulant of clause 13 further comprising:
   a high porosity carrier wherein the combined loading of the first and second effective amounts of amino acids in the carrier is approximately 1.7 - 3.5 % w/w.
16. The feeding stimulant of clause 13 further comprising:
   a low porosity carrier wherein the combined loading of the first and second effective amounts of amino acids in the carrier is approximately 3.4 - 7.0+ % w/w.
17. The feeding stimulant of clause 13, wherein the composition of said carrier comprises natural food items, manufactured food items, artificial food items and lures, inorganic media, and organic media.
18. A feeding stimulant for fish and other aquatic life forms comprising:
   a first effective amount of one or more amino acids from the long neutral (LN) class of amino acids comprising L-valine, L-phenylalanine, L-isoleucine, L-histidine, L-leucine, and/or L-methionine; and
   a second effective amount of an amino acid mixture containing basic (B) and long neutral (LN) amino acids;.
   wherein the molar ratio of the combined effective amount of LN type amino acids from the first effective amount and the second effective amount of the amino acid mixture, to the effective amount of B class amino acids within the second amino acid mixture, is in the range of 7.1:1 - 8.1:1.
19. The feeding stimulant of clause 18 wherein the amino acid mixture comprises natural digested protein sources, fermented protein or synthetic amino acid blends.
20. The feeding stimulant of clause 19 further comprising:
   a carrier wherein the loading of the first and second effective amounts of amino acids in the carrier generate amino acid flux rates, emanating from the carrier, in the range of 33 - 68 mg/min/dL when the carrier is placed in an aqueous environment.
21. The feeding stimulant of clause 19 further comprising:
   a high porosity carrier wherein the combined loading of the first and second effective amounts of amino acids in the carrier is approximately 2.5 - 5.1 % w/w.
22. The feeding stimulant of clause 19 further comprising:
   a low porosity carrier wherein the combined loading of the first and second effective amounts of amino acids in the carrier is approximately 5.0 - 10.2+ % w/w.
23. A feeding stimulant for fish and other aquatic life forms, comprising:
   a first effective amount of one or more amino acids from the 'special' class of amino acids; and
   a second effective amount of one or more amino acids from the basic (B) or long neutral (LN) class of amino acids;
   wherein the molar ratio of the first effective amount to the second effective amount is in the range of 0.5:1 - 2:1.
24. The feeding stimulant of clause 23 wherein the first effective amount of amino acids from the 'special' class comprises at least one of L-glycine, L-cysteine, L-proline and trimethylglycine (TMG) and the second effective amount of amino acids is selected from the basic (B) class and comprises at least one of L-lysine, L-arginine and, L-histidine.
25. The feeding stimulant of clause 24 further comprising:
   a carrier wherein the loading of the first and second effective amounts of amino acids in the carrier generate amino acid flux rates, emanating from the carrier, of greater than ∼26 mg/min/dL when the carrier is placed in an aqueous environment.
26. The feeding stimulant of clause 24 further comprising:
   a high porosity carrier wherein the combined loading of the first and second effective amounts of amino acids in the carrier is greater than approximately 2.0% w/w.
27. The feeding stimulant of clause 24 further comprising:
   a low porosity carrier wherein the combined loading of the first and second effective amounts of amino acids in the carrier is greater than approximately 4.0% w/w.
28. The feeding stimulant of clause 24, wherein the composition of said carrier comprises natural food items, manufactured food items, artificial food items and lures, inorganic media and organic media.
29. The feeding stimulant of clause 23 wherein the first effective amount of amino acids from the 'special' class comprises at least one of L-glycine, L-cysteine, L-proline or trimethylglycine (TMG) and the second effective amount of amino acids is selected from the long neutral (LN) class and comprises at least one of L-valine, L-phenylalanine, L-isoleucine, L-histidine, L-leucine, and L-methionine.
30. The feeding stimulant of clause 29 further comprising:
   a carrier wherein the loading of the first and second effective amounts of amino acids in the carrier generate amino acid flux rates, emanating from the carrier, of greater than ∼52 mg/min/dL when the carrier is placed in an aqueous environment.
31. The feeding stimulant of clause 29 further comprising:
   a high porosity carrier wherein the loading of the first and second effective amounts of amino acids in the carrier is greater than approximately 4.0% w/w.
32. The feeding stimulant of clause 29 further comprising:
   a low porosity carrier wherein the loading of the first and second effective amounts of amino acids in the carrier is greater than approximately 8.0+% w/w.
33. A fish food or other product for invoking an involuntary feeding response from fish and other aquatic life forms, comprising:
   a carrier wherein the composition of said carrier comprises natural food items, manufactured food items, artificial food items and lures, inorganic media and organic media.
   a first effective amount of one or more amino acids from the basic or long neutral classes of amino acids;
   a second effective amount of one or more amino acids from the 'special' class of amino acids;
   wherein the ratio of the first effective amount to the second effective amount is 0.5:1 - 2:1.
34. The fish food product of clause 33 wherein the first effective amount is 4.8-5.2 kg of lysine and the second effective amount is 0.5 - 2.0 kg of glycine.
35. The fish food product of clause 33 wherein the carrier comprises a high porosity material wherein the combined loading of the first and second effective amounts of amino acids in the carrier is greater than approximately 2.0% w/w.
36. The fish food product of clause 33 wherein the carrier comprises a low porosity material wherein the combined loading of the first and second effective amounts of amino acids in the carrier is greater than approximately 4.0+% w/w.
37. A method of preparing a feeding product for fish and other aquatic life forms, comprising:
   grinding 600g - 1350 g of a fish feeding stimulant including a first effective amount of one or more amino acids from the basic class of amino acids combined with a second effective amount of one or more amino acids from the 'special' class of amino acids (L-glycine) into a fine powder;
   bringing 1.0 - 2.25 L of water to a boil, then cooling to approximately 80 °C;
   slowly adding the 600g - 1350 g of fish feeding stimulant to the pre-boiled water while stirring;
   stirring the solution until the solids are completely dissolved;
   spraying the solution directly onto 25 kg of feed pellets while tumbling the mix well; and
   air dry treated pellets for 45-60 minutes.
   wherein the effective amount is an amount that will release the amino acids at a rate of greater than 26 mg/min/L within a body of water.
38. The method of clause 37 wherein the first effective amount is 4.8-5.2 kg of lysine and the second effective amount is 0.5 - 2.0 kg of L-glycine.

## Claims

1. A feeding stimulant for fish and other aquatic life forms, comprising:
a first effective amount of one or more amino acids from a first special class of amino acids; and
a second effective amount of one or more amino acids from a second basic (B) or long neutral (LN) class of amino acids;
wherein the molar ratio of the first effective amount to the second effective amount is in the range of 0.5:1 - 2:1.

2. The feeding stimulant of claim 1 wherein the first effective amount of amino acids from the first special class comprises at least one of L-glycine, L-cysteine, L-proline and trimethylglycine (TMG) and the second effective amount of amino acids is selected from the second basic (B) class and comprises at least one of L-lysine, L-arginine and, L-histidine.

3. The feeding stimulant of claim 2 further comprising:
a carrier wherein the loading of the first and second effective amounts of amino acids in the carrier generate amino acid flux rates, emanating from the carrier, of greater than ∼26 mg/min/dL when the carrier is placed in an aqueous environment.

4. The feeding stimulant of claim 2 further comprising:
a high porosity carrier wherein the combined loading of the first and second effective amounts of amino acids in the carrier is greater than approximately 2.0% w/w.

5. The feeding stimulant of claim 2 further comprising:
a low porosity carrier wherein the combined loading of the first and second effective amounts of amino acids in the carrier is greater than approximately 4.0% w/w.

6. The feeding stimulant of claim 2, wherein the composition of said carrier comprises natural food items, manufactured food items, artificial food items and lures, inorganic media and organic media.

7. The feeding stimulant of claim 1 wherein the first effective amount of amino acids from the first 'special' class comprises at least one of L-glycine, L-cysteine, L-proline or trimethylglycine (TMG) and the second effective amount of amino acids is selected from the second long neutral (LN) class and comprises at least one of L-valine, L-phenylalanine, L-isoleucine, L-histidine, L-leucine, and L-methionine.

8. The feeding stimulant of claim 7 further comprising:
a carrier wherein the loading of the first and second effective amounts of amino acids in the carrier generate amino acid flux rates, emanating from the carrier, of greater than ∼52 mg/min/dL when the carrier is placed in an aqueous environment.

9. The feeding stimulant of claim 7 further comprising:
a high porosity carrier wherein the loading of the first and second effective amounts of amino acids in the carrier is greater than approximately 4.0% w/w.

10. The feeding stimulant of claim 7 further comprising:
a low porosity carrier wherein the loading of the first and second effective amounts of amino acids in the carrier is greater than approximately 8.0+% w/w.
